(19) Europäisches Patentamt
European Patent Office
Office européen des brevets

(11) EP 2 018 302 B1

(12) **EUROPÄISCHE PATENTSCHRIFT**

(45) Veröffentlichungstag und Bekanntmachung des Hinweises auf die Patenterteilung:
**12.10.2011 Patentblatt 2011/41**

(21) Anmeldenummer: **07728350.5**

(22) Anmeldetag: **20.04.2007**

(51) Int Cl.:
***B60T 8/17*** *(2006.01)*
***B60T 8/1766*** *(2006.01)*
***B60T 8/26*** *(2006.01)*
***B60T 8/32*** *(2006.01)*
***B62L 3/08*** *(2006.01)*

(86) Internationale Anmeldenummer:
**PCT/EP2007/053891**

(87) Internationale Veröffentlichungsnummer:
**WO 2007/128670 (15.11.2007 Gazette 2007/46)**

(54) **VERFAHREN ZUR REGELUNG DES BREMSDRUCKES BEI KRAFTRÄDERN**

METHOD FOR REGULATING THE BRAKE PRESSURE IN MOTORCYCLES

PROCÉDÉ DE RÉGULATION DE LA PRESSION DE FREINAGE SUR LES MOTOCYCLETTES

(84) Benannte Vertragsstaaten:
**DE FR**

(30) Priorität: **06.05.2006 DE 102006021140**
**20.04.2007 DE 102007019039**

(43) Veröffentlichungstag der Anmeldung:
**28.01.2009 Patentblatt 2009/05**

(73) Patentinhaber: **Continental Teves AG & Co. OHG**
**60488 Frankfurt (DE)**

(72) Erfinder:
- **ECKERT, Alfred**
**55129 Mainz-Hechtsheim (DE)**
- **OLEJNIK, Peter**
**61191 Rosbach (DE)**
- **REVIOL, Ralf**
**63128 Dietzenbach-Steinberg (DE)**

(56) Entgegenhaltungen:
**EP-A- 1 702 822**
**EP-A2- 0 387 783**
**EP-B1- 1 318 933**
**DE-A1- 10 011 375**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft ein Verfahren gemäß Oberbegriff von Anspruch 1 sowie eine Bremsanlage für ein Kraftrad gemäß Oberbegriff von Anspruch 10.

Das Kraftrad hat sich im Laufe der letzten Jahrzehnte von einem kostengünstigen Fortbewegungsmittel zu einem Freizeitgefährt entwickelt, bei welchem vermehrt sowohl die Sicherheit als auch der Komfort des Fahrers in den Vordergrund gerückt wird.

Ähnlich wie bei den Automobilen vor einigen Jahren werden zunehmend auch Krafträder mit Anti-Blockiersystemen (ABS) ausgerüstet. Aus der EP 0 548 985 B1 ist beispielsweise eine Blockierschutzvorrichtung für Krafträder bekannt. Ferner ist aus der DE 40 00 212 A1 ein Verfahren zum blockiergeschützten Bremsen eines Kraftrades und zum Bestimmen des Haftbeiwertes bekannt.

Traditionell haben Krafträder je ein Betätigungselement für jeden der beiden Bremskreise. Meist wird die Vorderradbremse durch einen "Handbremshebel" und die Hinterradbremse durch einen "Fußbremshebel" betätigt.

Im Zusammenhang mit Motorrädern versteht man unter einer "Integralbremsanlage" eine Bremsanlage, bei der bei Betätigung des Handbremshebels bzw. des Fußbremshebels zusätzlich die Bremse des zweiten Bremskreises eingebremst wird. Durch Betätigen eines einzigen Betätigungselements können also beide Bremsen angesteuert werden. Werden bei Betätigung des Hand- und des Fußbremshebels jeweils beide Bremsen angesteuert, so bezeichnet man dies als Vollintegralbremse. Es sind jedoch auch Kombinationen möglich, bei denen ein Bremshebel auf ein Rad und der andere Bremshebel auf beide Räder wirkt (Teilintegralbremse). Integralbremsanlagen für Krafträder sind beispielsweise aus der DE 38 03 563 A1 und DE 103 16 351 A1 bekannt.

Bei Krafträdern mit Integralfunktion erfolgt aufgrund der Betätigung eines einzigen Betätigungselements (z.B. Handbremshebel und/oder Fußbremshebel) die automatische Bremskraftverteilung bzw. die Bremsdruckverteilung zwischen Vorderrad und Hinterrad entweder durch eine feste Hydraulikverschaltung (so genanntes Combined Brake System (CBS)), mittels welcher die Bremskraftverteilung in einem vorgegebenen Verhältnis unveränderbar vorgegeben ist, oder über eine Elektronik, mittels welcher die vorgegebene Bremskraftverteilung gesteuert wird. Bei den elektronischen Systemen mit Integralbremsfunktion und Antiblockierfunktion kann die Bremskraftverteilung zwischen Vorder- und Hinterrad bei einer ABS-Bremsung an die tatsächliche Beladung angepasst werden (Bremsenhandbuch, 2. Auflage Juli 2004, Vieweg Verlag, ISBN 3-528-13952-8, Seite 184-192).

Aus der DE 10 2005 003 255 A1 ist ein Bremssystem für Motorräder bekannt, welches bei einem konstruktiv einfachen Aufbau die Funktionalität von ABS und Integralbremse gewährleistet.

In der EP 1 318 933 B1 wird ein Verfahren zur Regelung der Bremskraft an den Rädern eines einspurigen Fahrzeugs unter Verwendung einer Bremsanlage mit Antiblockierfunktion und Integralbremsfunktion sowie eine entsprechende Bremsanlage offenbart. In der beschriebenen Vollintegral-Bremsanlage führt eine Betätigung des dem Hinterrad zugeordneten Fußbremshebels zu einer Aktivierung von Vorder- und Hinterradbremse. Dabei wird der Bremsdruck am Hinterradbremskreis in Abhängigkeit von dem erfassten Vorderradbremsdruck als Führungsgröße unter Zugrundelegung einer in einer Steuereinheit abgelegten idealen Bremskraftverteilungscharakteristik zwischen Vorder- und Hinterrad ermittelt.

Der Erfindung liegt die Aufgabe zugrunde, ein verbessertes Bremssystem mit Integralbremsfunktion und Antiblockierfunktion für Krafträder bzw. ein verbessertes Verfahren zur Regelung des Bremsdruckes bei einem Kraftrad mit einer Antiblockierfunktion und mit einer Integralbremsfunktion vorzuschlagen.

Diese Aufgabe wird erfindungsgemäß durch das Verfahren gemäß Anspruch 1 sowie die Bremsanlage gemäß Anspruch 10 gelöst.

Die Erfindung geht von einer Kraftradbremsanlage mit einer Antiblockierfunktion und mit einer elektronischen Integralbremsfunktion aus, bei welcher bei Betätigung des Hinterradbremshebels der Vorderradbremsdruck anhand einer ersten vorgegebenen Abhängigkeit von dem Druck des Hinterrad-Hauptbremszylinders geregelt wird.

Der Erfindung liegt der Gedanke zugrunde, dass im Falle eines Antiblockierregeleingriffs am Hinterrad des Kraftrades ein Vorderradbremsdruck durch die Integralfunktion eingesteuert wird, welcher größerer ist als der Vorderradbremsdruck, welcher bei dem vorliegenden Druck am Hinterrad-Hauptbremszylinder bei keinem Antiblockierregeleingriff anhand der ersten Abhängigkeit durch die Integralfunktion eingesteuert würde.

Bevorzugt wird der im Falle eines Antiblockierregeleingriffs am Hinterrad eingesteuerte Vorderradbremsdruck anhand einer zweiten vorgegebenen Abhängigkeit aus dem durch die Bremsbetätigung hervorgerufenen Druck am Hinterrad-Hauptbremszylinder bestimmt. Durch die Vorgabe einer zweiten Abhängigkeit ist eine schnelle und problemlose Bestimmung des einzusteuernden Vorderradbremsdrucks gewährleistet. Diese zweite Abhängigkeit ist besonders bevorzugt in einem Steuergerät abgelegt. Ganz besonders bevorzugt wird sie in dem elektronischen Steuergerät der Bremsanlage hinterlegt.

Gemäß einer alternativen bevorzugten Ausführungsform des erfindungsgemäßen Verfahrens wird der im Falle eines Antiblockierregeleingriffs am Hinterrad durch die Integralfunktion eingesteuerte Vorderradbremsdruck anhand der erzielten Bremswirkung des Kraftrades eingeregelt. Dies bietet den Vorteil einer flexiblen Regelung des Vorderradbremsdrucks entsprechend des tatsächlichen Verlaufs des Bremsvorganges. Hierzu wird besonders bevorzugt das momentane Bremsmoment des Kraftrades mit einem vorgegebenen Sollbremsmoment verglichen, und der Vorderradbremsdruck derart geregelt, dass momentanes Bremsmoment und Sollbremsmoment näherungsweise übereinstimmen. Ganz besonders bevorzugt wird das momentane Bremsmoment aus dem mittleren Hinterradbremsdruck bestimmt. Dies geschieht vorteilhafterweise anhand einer vorgegeben Kennlinie. Das Soll-Bremsmoment entspricht ganz besonders bevorzugt dem Bremsmoment, welches sich bei einer Bremsung mit demselben Druck am Hinterrad-Hauptbremszylinder ohne Antiblockierregelung ergeben würde.

Ebenso ist es bevorzugt, dass der bei einem Antiblockierregeleingriff am Hinterrad eingesteuerte Vorderradbremsdruck in Abhängigkeit von der Fahrzeuggeschwindigkeit gewählt wird. Durch Betrachtung der Fahrzeuggeschwindigkeit wird eine Beurteilung der Fahrsituation möglich und so kein eine der Fahrsituation angepasste Wahl bzw. Regelung des Vorderradbremsdrucks durchgeführt werden.

Der bei einem Antiblockierregeleingriff am Hinterrad eingesteuerte Vorderradbremsdruck wird bevorzugt so viel größer gewählt, dass die im Falle eines Antiblockierregeleingriffs erzielte Bremswirkung des Kraftrades in etwa gleich ist zu der im Falle keines Antiblockierregeleingriffs erzielten Bremswirkung. Dies wird als so genannte Kompensation bezeichnet. Besonders bevorzugt wird die Kompensation für jeden vorgegebenen Hauptbremszylinderdruck des Hinterradbremskreises erreicht. Durch eine derartige Wahl des Vorderradbremsdrucks wird im Falle einer Antiblockierregelung am Hinterrad in etwa dieselbe Bremswirkung und damit derselbe Bremsweg erzielt, wie wenn bei einer Bremsung mit gleicher Bremsbetätigung keine Antiblockierregelung auftritt. Der Verlust von Bremswirkung durch die Antiblockier-Bremsdruckregelung am Hinterrad wird also durch den vergrößerten Bremsdruck am Vorderrad kompensiert.

Gemäß einer anderen bevorzugten Ausführungsform des erfindungsgemäßen Verfahrens wird der bei einem Antiblockierregeleingriff am Hinterrad eingesteuerte Vorderradbremsdruck so viel größer gewählt, dass die im Falle eines Antiblockierregeleingriffs erzielte Bremswirkung des Kraftrades größer ist als die im Falle keines Antiblockierregeleingriffs erzielte Bremswirkung. Dies wird als so genannte Überkompensation bezeichnet. Besonders bevorzugt wird der Vorderradbremsdruck derart gewählt, dass die erzielte Bremswirkung um ein vorgegebenes Maß größer ist als die im Falle keines Antiblockierregeleingriffs erzielte Bremswirkung. Außerdem ist es besonders bevorzugt, dass die Überkompensation für jeden vorgegebenen Druck am Hinterrad-Hauptbremszylinder erreicht wird. Durch eine derartige Wahl des Vorderradbremsdrucks wird im Falle einer Antiblockierregelung am Hinterrad eine Art Bremsassistenzfunktion realisiert, da im Vergleich zur Bremsung ohne Antiblockierregeleingriff durch die Überkompensation eine größere Bremswirkung erzielt wird.

Die beschriebene Bremsassistenzfunktion ist besonders vorteilhaft bei einer Notbremsung, um den Fahrer bei der Bremsung zu unterstützen und einen möglichst geringen Bremsweg zu erreichen. Daher wird gemäß einer bevorzugten Ausführungsform des erfindungsgemäßen Verfahrens der Vorderradbremsdruck dann derart gewählt, dass die im Falle eines Antiblockierregeleingriffs erzielte Bremswirkung größer ist als die im Falle keines Antiblockierregeleingriffs erzielte Bremswirkung, wenn es sich um eine erkannte Notbremsung handelt.

Ebenso wird der Vorderradbremsdruck bevorzugt dann derart gewählt, dass die im Falle eines Antiblockierregeleingriffs erzielte Bremswirkung des Kraftrades größer ist als die im Falle keines Antiblockierregeleingriffs erzielte Bremswirkung, wenn der Hinterradbremsdruck bei Eintritt in die Antiblockierregelung größer als ein vorgegebener Grenzwert ist. Ein großer Hinterradbremsdruck deutet auf einen größeren Reibwert hin und damit auf die Möglichkeit, bei Überkompensation eine größere Bremswirkung, und damit einen kürzeren Bremsweg, zu erzielen. Bei kleinen Hinterradbremsdrücken ist eine Überkompensation nicht unbedingt notwendig. Daher wird dann bevorzugt die oben beschriebene Kompensation durchgeführt, bei welcher der Vorderradbremsdruck derart gewählt wird, dass die im Falle eines Antiblockierregeleingriffs erzielte Bremswirkung des Kraftrades in etwa gleich ist zu der im Falle keines Antiblockierregeleingriffs erzielten Bremswirkung.

Alternativ oder zusätzlich wird der Vorderradbremsdruck bevorzugt dann derart gewählt, dass die im Falle eines Antiblockierregeleingriffs erzielte Bremswirkung größer als die im Falle keines Antiblockierregeleingriffs erzielte Bremswirkung ist, wenn der Reibwert der Fahrbahn höher als ein vorgegebener Grenzwert ist. Ein großer Reibwert bedeutet, bei Überkompensation eine größere Bremswirkung, und damit einen kürzeren Bremsweg, zu erzielen. Bei niedrigen Reibwerten ist eine Überkompensation nachteilig, da durch die Überkompensation ein instabiler Fahrzustand hervorgerufen wird, ohne dass die Bremswirkung nennenswert erhöht wird. Daher wird bei einem Reibwert, der niedriger als ein vorgegebener Grenzwert ist, die oben beschriebene Kompensation bevorzugt, bei welcher der Vorderradbremsdruck derart gewählt wird, dass die im Falle eines Antiblockierregeleingriffs erzielte Bremswirkung des Kraftrades in etwa gleich ist zu der im Falle keines Antiblockierregeleingriffs erzielten Bremswirkung.

Alternativ oder zusätzlich wird der Vorderradbremsdruck bevorzugt dann derart gewählt, dass die im Falle eines Antiblockierregeleingriffs erzielte Bremswirkung größer als die im Falle keines Antiblockierregeleingriffs erzielten Bremswirkung ist, wenn die Fahrzeuggeschwindigkeit größer als ein vorgegebener Grenzwert ist. Bremsungen bei hohen Geschwindigkeiten sind generell als kritisch zu betrachten und daher ist eine Überkompensation von Vorteil, um das Kraftrad möglichst schnell abzubremsen. Bei niedrigen Geschwindigkeiten wird keine Überkompensation durchgeführt, da es sich hierbei um langsame Fahrten um enge Kurven oder um Rangierbetrieb handeln kann, bei welchen/welchem eine Überkompensation vom Fahrer als störend empfunden wird. Daher wird bei Geschwindigkeiten, die niedriger als ein vorgegebener Grenzwert sind, die oben beschriebene Kompensation bevorzugt, bei welcher der Vorderradbremsdruck derart gewählt wird, dass die im Falle eines Antiblockierregeleingriffs erzielte Bremswirkung des Kraftrades in etwa gleich ist zu der im Falle keines Antiblockierregeleingriffs erzielten Bremswirkung.

Die Erfindung betrifft auch eine Bremsanlage für Krafträder mit einem Antiblockiersystem und mit einer Integralbremsfunktion, in welcher ein erfindungsgemäßes Verfahren durchgeführt wird.

Ein Vorteil der Erfindung liegt darin, dass ein möglichst kurzer Bremsweg auch im Falle einer Antiblockierregelung und/oder einer Starkbremsung (Gefahrenbremsung) gewährleistet wird.

Weitere bevorzugte Ausführungsformen der Erfindung ergeben sich aus den Unteransprüchen und der nachfolgenden Beschreibung anhand von Figuren.

Es zeigen

Fig. 1 eine beispielgemäße Integralbremsanlage eines Mo- torrades zur Durchführung eines erfindungsgemäßen Verfahrens,

Fig. 2 einen Vergleich eines Zusammenhangs zwischen Druck am Fußbremszylinder und Bremsdruck am Vor- derrad für eine CBS-Bremsanlage und die bei- spielsgemäße Bremsanlage aus Fig. 1,

Fig. 3 eine erste beispielsgemäße Änderung des Zusammen- hangs zwischen Druck am Fußbremszylinder und Bremsdruck am Vorderrad nach einem Antiblockier- regeleinsatz am Hinterrad (Kompensation), und

Fig. 4 eine zweite beispielsgemäße Änderung des Zusam- menhangs zwischen Druck am Fußbremszylinder und Bremsdruck am Vorderrad nach einem Antiblockier- regeleinsatz am Hinterrad (Überkompensation).

In Fig. 1 ist eine beispielsgemäße Integralbremsanlage für ein Kraftrad dargestellt. Diese besteht aus zwei Bremskreisen 5, 6, einem für das Vorderrad VR und einem für das Hinterrad HR mit jeweils einem Hauptbremszylinder 7, 8. Mit einem Handbremshebel 1 betätigt der Fahrer direkt die Vorderradbremse(n) 9 und mit einem Fußpedal 2 wird die Hinterradbremse 10 betätigt. Die Bremsanlage enthält vier Drucksensoren 3, 3', 15, 15', jeweils zwei pro Vorderradbremskreis 5 und Hinterradbremskreis 6. Je ein Drucksensor 3', 3 misst den von dem zugehörigen Hauptbremszylinder 7, 8 (Vorderrad VR oder Hinterrad HR) erzeugten Druck $p^{mess}_{HZ\ VR}$, $p^{mess}_{HZ\ ,\ HR}$ und je ein Drucksensor 15', 15 misst den Radbremsdruck $p_{VR}$, $p_{HR}$ (Vorderrad VR oder Hinterrad HR).

Durch eine Betätigung am Fußpedal 2 wird ein Bremsdruck $p_{HR}$ am Hinterrad HR aufgebaut, da das Trennventil TV-HR und das SO-HR-Ventil (SO: stromlos offen) nicht bestromt werden und so ein hydraulischer Durchgriff besteht. Aufgrund der elektronischen Integralfunktion wird durch Detektion des Druckes $p^{mess}_{HZ\ HR}$ am Hauptbremszylinder 8 des Hinterradbremskreises 6, z.B. durch den Drucksensor 3, über die zweikreisig aufgeteilte Pumpe 12 gleichzeitig ein Bremsdruck $p_{VR}$ am Vorderrad VR aufgebaut, da dort das Ventil EUV-VR (Elektrisches Umschalt-Ventil) und das SO-VR-Ventil geöffnet sowie das TV-VR-Ventil geschlossen sind. Die zweikreisig aufgeteilte Pumpe 12 arbeitet nach dem Rückförderprinzip und die Pumpkolben der beiden Pumpenkreise werden gemeinsam von einem Elektromotor 13 angetrieben.

Mit einem Combined Brake System (CBS) (nicht dargestellt) ist eine rein mechanische/hydraulische Variante der Integralbremse gemeint. Hierbei gibt es vom Fußpedal 2 (Fußbremshebel), welches bei Bremsanlagen ohne Integralfunktion oder bei der Bremsanlage aus Fig. 1 nur in hydraulischer Verbindung zum Hinterrad HR steht, auch eine hydraulische Verbindung zum Vorderrad VR. Durch diese Hydraulik werden separate, in der Regel weniger und/oder in Summe kleinere Bremskolben am Vorderrad VR betrieben. Analoges gilt für den Handbremshebel 1.

Ein Bremsdruckaufbau am Vorderrad VR bei Betätigung des Fußpedals 2 (so genannte Funktion "rear to front" ("hinten-nach-vorne")), welcher von CBS-Anlagen bekannt ist, wird z.B. bei der Integralbremsanlage aus Fig. 1 "by wire" über eine aktive Bremsdruckerzeugung am Vorderrad VR ohne Zusatzkolben der Vorderradbremse 9 realisiert, in dem über ein elektronisches Steuergerät ECU Pumpe 12 angesteuert wird, welche den aktiven Druckaufbau durchführt. Hierzu ist eine Grundkennlinie vorgegeben, welche z.B. in dem elektronischen Steuergerät ECU abgelegt ist, und welche einen funktionalen Zusammenhang f zwischen dem durch die Betätigung des Fußbremshebels 2 hervorgerufenen Druck am Hauptbremszylinder $p^{mess}_{HZ\ HR}$ und dem am Vorderrad VR einzusteuernden Soll-Bremsdruck $p^{soll}_{VR}$ beschreibt:

$$p^{soll}_{VR} = f(p^{mess}_{HZ\ HR}) \qquad (1)$$

In Fig. 2 ist ein Vergleich eines Zusammenhangs zwischen Druck am Fußbremszylinder $p^{mess}_{HZ\ HR}$ und Bremsdruck am Vorderrad $p_{VR}$ für eine CBS-Bremsanlage und eine beispielsgemäße Bremsanlage schematisch dargestellt. Linie 20 stellt den Zusammenhang für eine CBS-Anlage und Linie 21 den Zusammenhang für eine elektronische, z.B. die in Fig. 1 dargestellte, Vollintegralbremsanlage beispielhaft dar. Zur Erzielung des gleichen Bremsmomentes benötigt die Bremsanlage aus Fig. 1 gegenüber der CBS-Anlage einen deutlich geringeren Bremsdruck $p_{VR}$, da aufgrund nur einer existierenden Hydraulikleitung in der Bremsanlage aus Fig. 1 alle vorhandenen Bremskolben am Vorderrad VR betätigt werden, wobei bei einer CBS-Anlage weniger und/oder kleinere Bremskolben am Vorderrad VR verwendet werden.

Im oberen Teil der Fig. 3 ist der am Vorderrad VR einzusteuernde Soll-Bremsdruck $p^{soll}_{VR}$ gegen den durch die Betätigung des Fußbremshebels 2 hervorgerufenen Druck am Hauptbremszylinder $p^{mess}_{HZ\ HR}$ aufgetragen. Linie 30 zeigt eine beispielsgemäße Grundkennlinie gemäß Gleichung (1). Linie 30 entspricht der Grundkennlinie 21 aus Fig. 2. Im unteren Teil der Fig. 3 ist mit Linie 31 das entsprechende Bremsmoment $M_{Brems}$ Gesamt (Gesamtbremsmoment des Motorrades) in Abhängigkeit des hinteren Hauptbremszylinder-Drucks $p^{mess}_{HZ\ HR}$ aufgetragen. Die beiden Linien 30 und 31 entsprechen den Verhältnissen, solange keine Antiblockierregelung am Hinterrad HR auftritt. Bei Grundkennlinie 30 handelt es sich beispielgemäß um eine lineare Kennlinie, d.h. einen linearen Zusammenhang zwischen hinterem Hauptbremszylinder-Druck $p^{mess}_{HZ\ HR}$ und Vorderradbremsdruck $p^{soll}_{VR}$.

Bei Betätigung des Fußbremshebels 2 und nachfolgender Antiblockierregelung am Hinterrad HR bei Punkt 32 vermindert sich durch die Antiblockier-Druckmodulation/ Druckbeschränkung am Hinterrad HR das mittlere Bremsmoment bzw. die Bremswirkung des Motorrades. Linie 34 im unteren Teil der Fig. 3 stellt das Bremsmoment $M_{Brems\ Gesamt}$ (Gesamtbremsmoment des Motorrades) dar, welches sich unter Verwendung der Grundkennlinie 30 bei einer Antiblockierregelung am Hinterrad HR ergibt. Hierbei wird aufgrund der Druckmodulation am Hinterrad HR das Bremsmoment $M_{Brems\ Gesamt}$ (Linie 34), welches bei einem entsprechend der Grundkennlinie 30 eingesteuerten Vorderradbremsdruck $p^{soll}_{VR}$ erzielt wird, geringer als das Bremsmoment $M_{Brems\ Gesamt}$ (Linie 31), welches ohne Antiblockierregelung am Hinterrad HR bei einem entsprechend der Grundkennlinie 30 eingesteuerten Vorderradbremsdruck $p^{soll}_{VR}$ erreicht wird.

Im Fall einer Antiblockierregelung wird nun erfindungsgemäß die Druck-Übertragungs-Kennlinie "hinten-nach-vorne" verändert, d.h. der funktionale Zusammenhang zwischen dem durch die Betätigung des Fußbremshebels hervorgerufenen Hauptbremszylinder-Druck $p^{mess}_{HZ\ HR}$ und dem am Vorderrad einzusteuernden Bremsdruck $p^{soll}_{VR}$ verändert. Z.B. wird eine entsprechende Kennlinie vorgegeben, welche z.B. in dem elektronischen Steuergerät ECU abgelegt ist, und welche den veränderten funktionalen Zusammenhang $f_{ABS}$ zwischen dem hinteren Hauptbremszylinder-Druck $p^{mess}_{HZ\ HR}$ und dem vorderen Soll-Bremsdruck $p^{soll}_{VR}$ beschreibt:

$$p^{soll}_{VR} = f_{ABS}(p^{mess}_{HZ\ HR}) \qquad (2)$$

Erfindungsgemäß wird bei einer Antiblockierregelung (ab Punkt 32) am Hinterrad HR für einen vorgegebenen hinteren Hauptbremszylinder-Druck $p^{mess}_{HZ\ HR}$ im Vergleich zur Grundkennlinie 30 höherer Vorderradbremsdruck $p^{soll}_{VR}$ eingesteuert.

Im oberen Teil der Fig. 3 ist eine beispielsgemäße Kennlinie 33 aufgetragen, welche einen gegenüber Gleichung (1) geänderten Zusammenhang $f^{Kompensation}_{ABS}$ zwischen Soll-Bremsdruck $p^{soll}_{VR}$ am Vorderrad VR und Hauptzylinderdrucks $p^{mess}_{HZ\ HR}$ des Hinterradbremskreises 6 beschreibt. Beispielsgemäß wird der Vorderradbremsdruck $p^{soll}_{VR}$ nach Kennlinie 33 im Vergleich zur Grundkennlinie 30 so stark erhöht, dass sich unter Verwendung der Kennlinie 33 bei einer Antiblockierregelung in der Summe (vorne und hinten) ungefähr das gleiche Bremsmoment $M_{Brems\ Gesamt}$ einstellt, welches sich ohne Antiblockierregelung am Hinterrad HR bei gleicher Fußbremshebelstellung/-betätigung eingestellt hätte (Linie 31). Bei Kennlinie 33 handelt es sich beispielsgemäß um eine lineare Kennlinie, d.h. einen linearen Zusammenhang $f^{Kompensation}_{ABS}$ zwischen hinterem Hauptbremszylinder-Druck $p^{mess}_{HZ}$ und Vorderradbremsdruck $p^{soll}_{VR}$.

Man kann also sagen, dass der, aufgrund der Antiblockierregelung, fehlende Hinterrad-Bremsanteil durch eine Erhöhung der Bremsübertragung auf das Vorderrad VR kompensiert wird.

Gemäß eines anderen Ausführungsbeispiels wird der Soll-Bremsdruck $p^{soll}_{VR}$ am Vorderrad VR nicht durch einen vorgegebenen funktionalen Zusammenhang $f^{Kompensation}_{ABS}$ festgelegt, sondern eingeregelt. Hierzu wird aus dem mittleren/gemittelten Bremsdruck $p_{HR}$ am Hinterrad HR anhand einer, z.B. im Steuergerät ECU, abgelegten Kennlinie auf das momentane Bremsmoment $M_{Brems\ Gesamt}$ geschlossen. Dieses wird mit dem Soll-Bremsmoment (entsprechendes Bremsmoment ohne Antiblockierregelung, Linie 31), welches bekannt ist, verglichen, und es erfolgt eine Erhöhung des Vorderradbremsdrucks $p^{soll}_{VR}$ bis momentanes und Soll-Bremsmoment in etwa übereinstimmen.

Gemäß eines weiteren Ausführungsbeispiels wird der fehlende Hinterrad-Bremsanteil bei Antiblockierregelung nicht nur kompensiert, sondern überkompensiert. Hierzu wird der Vorderradbremsdruck $p^{soll}_{VR}$ bei gegebenem Hauptbremszylinder-Druck $p^{mess}_{HZ\ HR}$ im Vergleich zu Kennlinie 33 (funktionaler Zusammenhang $f^{Kompensation}_{ABS}$) noch weiter erhöht. Dies lässt sich anhand eines entsprechenden funktionalen Zusammenhangs $f_{ABS}^{Überkompensation}$ zwischen dem durch die Betätigung des Fußbremshebels hervorgerufenen Druck am Hauptbremszylinder $p^{mess}_{HZ\ HR}$ und dem am Vorderrad einzusteuernden Bremsdruck $p^{soll}_{VR}$ beschreiben:

$$p^{soll}_{VR} = f_{ABS}^{Überkompensation}\ (p^{mess}_{HZ\ HR}) \qquad (3)$$

Im oberen Teil der Fig. 4 sind Grundkennlinie 30, Kennlinie 33 zur Kompensation und eine beispielsgemäße Kennlinie 40 zur Überkompensation im Vergleich dargestellt. Bei Kennlinie 40 handelt es sich beispielsgemäß um eine lineare Kennlinie, d.h. einen linearen Zusammenhang zwischen hinterem Hauptbremszylinder-Druck $p^{mess}_{HZ\ HR}$ und Vorderradbremsdruck $p^{soll}_{VR}$. Die Steigung der Kennlinie 33 ist größer als die der Grundkennlinie 30. Die Steigung der Kennlinie 40 ist nochmals größer als die der Kennlinie 33.

Linie 41 im unteren Teil der Fig. 4 stellt das Bremsmoment (Gesamtbremsmoment des Motorrades) dar, welches sich bei einer Antiblockierregelung am Hinterrad HR unter Verwendung der Kennlinie 40 ergibt. Für gegebenen hinteren Hauptbremszylinder-Druck $p^{mess}_{HZ}$ ist das sich bei Überkompensation ergebende Bremsmoment $M_{Brems\ Gesamt}$ (Linie 41) größer als das Bremsmoment $M_{Brems\ Gesamt}$ (Linie 31), welches bei Antiblockierregelung am Hinterrad HR bei Kompensation nach Kennlinie 33 erreicht wird.

Die Überkompensation führt dazu, dass das Vorderrad VR durch eine Betätigung des Fußbremshebels 2 früher in eine Antiblockierregelung geführt wird als dies bei Kompensation der Fall wäre. Dies entspricht der Funktionalität einer Bremsassistenz (BA) mit dem Antiblockierregelungseintritt 32 des Hinterrades HR als Indikator. Wenn der Fahrer am Hinterrad HR bis in die Antiblockierregelung hinein bremst (was zunächst eine instabilere Fahrsituation verursacht), kann man davon ausgehen, dass er einen Grund hierfür hat, und es sich somit um eine Notbremsung handelt. Das beispielsgemäße Verfahren unterstützt den Fahrer durch eine Art von Bremsassistent, indem die vorgenannte Kompensation gezielt überhöht wird (Überkompensation), um auch das Vorderrad VR bis in die Antiblockierregelung zu führen. Man erzielt damit eine gezielte Erhöhung des Gesamtbremsmomentes (Linie 41 in Fig. 4) im Vergleich zu der Bremswirkung ohne Antiblockierregelungseingriff bei gleicher Fußbremshebelstellung (Linie 31).

Ob eine Kompensation oder eine Überkompensation durchgeführt werden soll, kann vom Hinterrad-Bremsdruck $p_{HR}$ bei Antiblockierregelungseintritt 32 (am Hinterrad HR) abhängig gemacht werden. Ein kleiner Hinterrad-Druck $p_{HR}$ (z.B. geringer als ein vorgegebener Grenzwert) bei Antiblockierregelungseintritt 32 entspricht einem kleinen Reibwert (Reifen-Fahrbahn). Hier ist die Notwendigkeit einer Überkompensation nicht unbedingt gegeben. Ein größerer Hinterrad-Druck $p_{HR}$ (z.B. größer als ein vorgegebener Grenzwert) bei Antiblockierregelungseintritt 32 ist Indikation für größere (mittlere bis große) Reibwerte. Hier ist ein auszunutzendes Potential für eine Überkompensation gegeben. Man kann also die Entscheidung "Überkompensation ja oder nein?" davon ableiten, ob überhaupt ein genügend hoher Reibwert für eine Überkompensation vorliegt. Bei niedrigen Reibwerten wäre Überkompensation eher nachteilig, da man sehr schnell einen instabilen Fahrzustand hervorrufen würde, ohne die Bremswirkung nennenswert zu erhöhen. Niedrige Reibwerte kann man z.B. an einem Antiblockierregelungseintritt 32 bei niedrigen Bremsdrücken erkennen.

Auch kann für die Entscheidung "Überkompensation ja oder nein?" die Fahrzeuggeschwindigkeit herangezogen werden. Bei niedrigen Geschwindigkeiten wird von einer Überkompensation abgesehen, da es sich hierbei auch um enge Kurven oder Rangierbetrieb handeln könnte und eine Überkompensation dann sehr unerwünscht wäre. Auch sind niedrigere Geschwindigkeits-Bereiche weniger kritisch, und man kann dort auf eine Bremsassistenz verzichten.

## Patentansprüche

1. Verfahren zur Regelung des Bremsdruckes bei einem Kraftrad mit einer Antiblockierfunktion und mit einer Integralbremsfunktion, wobei durch die Integralbremsfunktion Vorderradbremsmittel (9) in Verbindung mit einer Bremsbetätigung an einem Hinterrad (HR) betätigt werden und ein Bremsdruck ($p^{soll}_{VR}$) in einem Vorderradbremskreis (5) anhand einer ersten vorgegebenen Abhängigkeit (f) von einem durch die Bremsbetätigung hervorgerufenen Druck ($p^{mess}_{HZ\ HR}$) am Hauptbremszylinder (8) eines Hinterradbremskreises (6) geregelt wird, **dadurch gekennzeichnet, dass** bei einem aufgrund der Antiblockierfunktion erfolgenden Regeleingriff (32) an dem Hinterrad (HR) wahrend einer Integralbremsung ein größerer Bremsdruck ($p^{soll}_{VR}$) in dem Vorderradbremskreis (5) eingesteuert wird als bei dem vorliegenden Druck ($p^{mess}_{HZ\ HR}$) am Hauptbremszylinder (8) des Hinterradbremskreises (6) anhand der ersten Abhängigkeit (f) bei keinem Antiblockierregeleingriff eingesteuert wird.

2. Verfahren nach Anspruch 1, **dadurch gekennzeichnet, dass** der bei einem Antiblockierregeleingriff (32) an dem Hinterrad (HR) eingesteuerte Vorderradbremsdruck ($p^{soll}_{VR}$) anhand einer zweiten vorgegebenen Abhängigkeit ($f_{ABS}$) aus dem durch die Bremsbetätigung hervorgerufenen Druck ($p^{mess}_{HZ\ HR}$) am Hauptbremszylinder (8) des Hinterradbremskreises (6) bestimmt wird.

**3.** Verfahren nach Anspruch 1, **dadurch gekennzeichnet, dass** der bei einem Antiblockierregeleingriff (32) an dem Hinterrad (HR) eingesteuerte Vorderradbremsdruck ($p^{soll}_{VR}$) anhand der erzielten Bremswirkung ($M_{Brems\ Gesamt}$) des Kraftrades geregelt wird.

**4.** Verfahren nach mindestens einem der Ansprüche 1 bis 3, **dadurch gekennzeichnet, dass** der bei einem Antiblockierregeleingriff (32) an dem Hinterrad (HR) eingesteuerte Vorderradbremsdruck ($p^{soll}_{VR}$) so viel größer gewählt wird ($f^{Kompensation}_{ABS}$), dass die im Falle eines Antiblockierregeleingriffs (32) erzielte Bremswirkung ($M_{Brems\ Gesamt}$) des Kraftrades, insbesondere für jeden vorgegebenen Druck ($p^{mess}_{HZ\ HR}$) am Hauptbremszylinder (8) des Hinterradbremskreises (6), in etwa gleich ist zu der im Falle keines Antiblockierregeleingriffs erzielten Bremswirkung (31).

**5.** Verfahren nach Anspruch 4, **dadurch gekennzeichnet, dass** der Vorderradbremsdruck ($p^{soll}_{VR}$) so gewählt wird, dass die im Falle eines Antiblockierregeleingriffs (32) erzielte Bremswirkung ($M_{Brems\ Gesamt}$) des Kraftrades in etwa gleich ist zu der im Falle keines Antiblockierregeleingriffs erzielten Bremswirkung (31), wenn der Hinterradbremsdruck ($p_{VR}$) bei Eintritt (32) in die Antiblockierregelung kleiner als ein vorgegebener Grenzwert und/oder der Reibwert der Fahrbahn geringer als ein vorgegebener Grenzwert und/oder die Fahrzeuggeschwindigkeit geringer als ein vorgegebener Grenzwert ist.

**6.** Verfahren nach mindestens einem der Ansprüche 1 bis 3, **dadurch gekennzeichnet, dass**, insbesondere für jeden vorgegebenen Druck ($p^{mess}_{HZ\ HR}$) am Hauptbremszylinder (8) des Hinterradbremskreises (5), der bei einem Antiblockierregeleingriff (32) an dem Hinterrad (HR) eingesteuerte Vorderradbremsdruck ($p^{soll}_{VR}$) so viel größer gewählt wird ($f^{Überkompensation}_{ABS}$), dass die im Falle eines Antiblockierregeleingriffs (32) erzielte Bremswirkung ($M_{Brems\ Gesamt}$, 41) des Kraftrades, insbesondere um ein vorgegebenes Maß, größer ist als die im Falle keines Antiblockierregeleingriffs erzielte Bremswirkung (31).

**7.** Verfahren nach Anspruch 6, **dadurch gekennzeichnet, dass** der Vorderradbremsdruck ($p^{soll}_{VR}$) so gewählt wird, dass die im Falle eines Antiblockierregeleingriffs (32) erzielte Bremswirkung ($M_{Brems\ Gesamt}$, 41) des Kraftrades größer ist als die im Falle keines Antiblockierregeleingriffs erzielte Bremswirkung (31), wenn es sich um eine Notbremsung handelt.

**8.** Verfahren nach Anspruch 6 oder 7, **dadurch gekennzeichnet, dass** der Vorderradbremsdruck ($p^{soll}_{VR}$) so gewählt wird, dass die im Falle eines Antiblockierregeleingriffs (32) erzielte Bremswirkung ($M_{Brems\ Gesamt}$, 41) des Kraftrades größer ist als die im Falle keines Antiblockierregeleingriffs erzielte Bremswirkung (31), wenn der Hinterradbremsdruck ($p_{VR}$) bei Eintritt (32) in die Antiblockierregelung größer als ein vorgegebener Grenzwert und/oder der Reibwert der Fahrbahn höher als ein vorgegebener Grenzwert und/oder die Fahrzeuggeschwindigkeit größer als ein vorgegebener Grenzwert ist.

**9.** Verfahren nach mindestens einem der Ansprüche 1 bis 8, **dadurch gekennzeichnet, dass** der bei einem Antiblockierregeleingriff (32) an dem Hinterrad (HR) eingesteuerte Vorderradbremsdruck ($p^{soll}_{VR}$) in Abhängigkeit von der Fahrzeuggeschwindigkeit gewählt wird.

**10.** Bremsanlage für Krafträder mit einem Antiblockiersystem und mit einer, insbesondere elektronischen, Integralbremsfunktion, **dadurch gekennzeichnet, dass** in diesem ein Verfahren gemäß einem der Ansprüche 1 bis 9 durchgeführt wird.

## Claims

**1.** Method for regulating the brake pressure in a motorcycle having an antilock function and having an integral brake function, wherein, by means of the integral brake function, front wheel braking means (9) are activated in conjunction with activation of the brake at a rear wheel (RW) and a brake pressure ($p^{setp}_{FW}$) in a front wheel brake circuit (5) is regulated on the basis of a first predefined dependency (f) from a pressure ($p^{meas}_{MC\ RW}$) which is brought about at the master brake cylinder (8) of a rear wheel brake circuit (6) as a result of the activation of the brake, **characterized in that**, when a regulating intervention (32) which takes place owing to the antilock function occurs at the rear wheel (RW) during integral braking, a higher brake pressure ($p^{setp}_{FW}$) is applied in the front wheel brake circuit (5) than is applied at the prevailing pressure ($p^{meas}_{MC\ RW}$) at the master brake cylinder (8) of the rear wheel brake circuit (6) on the basis of the first dependency (f) when an antilock regulating intervention does not occur.

**2.** Method according to Claim 1, **characterized in that** the front wheel brake pressure ($p^{setp}_{FW}$) which is applied when an antilock regulating intervention (32) occurs at the rear wheel (RW) is determined on the basis of a second predefined dependency ($f_{ABS}$) from the pressure ($p^{meas}_{MC\ RW}$) which is brought about at the master brake cylinder (8) of the rear wheel brake circuit (6) as a result of the activation of the brake.

**3.** Method according to Claim 1, **characterized in that** the front wheel brake pressure ($p^{setp}_{FW}$) which is applied when an antilock regulating intervention (32) occurs at the rear wheel (RW) is regulated on the basis of the achieved braking effect ($M_{brake\ total}$) of the motorcycle.

**4.** Method according to at least one of Claims 1 to 3, **characterized in that** the front wheel brake pressure ($p^{setp}_{FW}$) which is applied when an antilock regulating intervention (32) occurs at the rear wheel (RW) is selected to be so much higher ($f^{compensation}_{ABS}$) that the braking effect ($M_{brake\ total}$) on the motorcycle which is achieved in the case of an antilock braking intervention (32), in particular for any predefined pressure ($p^{meas}_{MC\ RW}$) at the master brake cylinder (8) of the rear wheel brake circuit (6) is approximately the same as the braking effect (31) which is achieved in the case of no antilock regulating intervention.

**5.** Method according to Claim 4, **characterized in that** the front wheel brake pressure ($p^{setp}_{FW}$) is selected such that the braking effect ($M_{brake\ total}$) on the motorcycle which is achieved in the case of an antilock regulating intervention (32) is approximately the same as the braking effect (31) which is achieved in the case of no antilock regulating intervention when the rear wheel brake pressure ($p_{FW}$) at the start (32) of the antilock regulation is lower than a predefined limiting value, and/or the coefficient of friction of the underlying surface is lower than a predefined limiting value and/or the velocity of the vehicle is lower than a predefined limiting value.

**6.** Method according to at least one of Claims 1 to 3, **characterized in that**, in particular for each predefined pressure ($p^{meas}_{MC\ RW}$) at the master brake cylinder (8) of the rear wheel brake circuit (5), the front wheel brake pressure ($p^{setp}_{FW}$) which is applied when there is an antilock regulating intervention (32) at the rear wheel (RW) is selected to be higher ($f^{overcompensation}_{ABS}$) to such an extent that the braking effect ($M_{brake\ total}$, 41) on the motorcycle which is achieved in the case of an antilock regulating intervention (32) is greater, in particular by a predefined amount, than the braking effect (31) which is achieved in the case of no antilock regulating intervention.

**7.** Method according to Claim 6, **characterized in that** the front wheel brake pressure ($p^{setp}_{FW}$) is selected such that the braking effect ($M_{brake\ total}$, 41) on the motorcycle which is achieved in the case of an antilock regulating intervention (32) is greater than the braking effect (31) which is achieved in the case of no antilock regulating intervention when the braking is emergency braking.

**8.** Method according to Claim 6 or 7, **characterized in that** the front wheel brake pressure ($p^{setp}_{FW}$) is selected such that the braking effect ($M_{brake\ total}$, 41) on the motorcycle which is achieved in the case of an antilock regulating intervention (32) is greater than the braking effect (31) which is achieved in the case of no antilock regulating intervention when the rear wheel brake pressure ($p_{FW}$) at the start (32) of the antilock regulation is higher than a predefined limiting value and/or the coefficient of friction of the underlying surface is higher than a predefined limiting value and/or the velocity of the vehicle is higher than a predefined limiting value.

**9.** Method according to at least one of Claims 1 to 8, **characterized in that** the front wheel brake pressure ($p^{setp}_{FW}$) which is applied when an antilock regulating intervention (32) occurs at the rear wheel (RW) is selected as a function of the velocity of the vehicle.

**10.** Brake system for motorcycles having an antilock system and having an, in particular electronic, integral brake function, **characterized in that** a method according to one of Claims 1 to 9 is carried out in said antilock system.

**Revendications**

**1.** Procédé de régulation de la pression de freinage sur une motocyclette comprenant une fonction d'antiblocage et une fonction de freinage intégral, des moyens de freinage de roue avant (9) étant actionnés par la fonction de freinage intégral en liaison avec une commande de frein sur une roue arrière (HR) et une pression de freinage

($p^{soll}_{VR}$) dans un circuit de freinage de roue avant (5) étant régulée à l'aide d'une première dépendance prédéfinie (f) d'une pression ($p^{mess}_{HZ\ HR}$) provoquée par l'actionnement des freins sur le cylindre de freinage principal (8) d'un circuit de freinage de roue arrière (6), **caractérisé en ce que** dans le cas d'une intervention de réglage (32) ayant lieu du fait de la fonction d'antiblocage sur la roue arrière (HR) pendant un freinage intégral, une plus grande pression de freinage ($p^{soll}_{VR}$) est commandée dans le circuit de freinage de roue avant (5) que dans le cas de la pression existant ($p^{mess}_{HZ\ HR}$) au niveau du cylindre de freinage principal (8) du circuit de freinage de roue arrière (6) à l'aide de la première dépendance (f) lorsqu'aucune intervention de régulation d'antiblocage n'est commandée.

2. Procédé selon la revendication 1, **caractérisé en ce que** la pression de freinage de roue avant ($p^{soll}_{VR}$) commandée dans le cas d'une intervention de réglage d'antiblocage (32) sur la roue arrière (HR) est déterminée à l'aide d'une deuxième dépendance prédéfinie ($f_{ABS}$) à partir de la pression ($p^{mess}_{HZ\ HR}$) provoquée par l'actionnement des freins au niveau du cylindre de freinage principal (8) du circuit de freinage de roue arrière (6).

3. Procédé selon la revendication 1, **caractérisé en ce que** la pression de freinage de roue avant ($p^{soll}_{VR}$) commandée dans le cas d'une intervention de réglage d'antiblocage (32) sur la roue arrière (HR) est régulée à l'aide de l'action de freinage obtenue ($M_{Brems\ Gesamt}$) de la motocyclette.

4. Procédé selon au moins l'une quelconque des revendications 1 à 3, **caractérisé en ce que** la pression de freinage de roue avant ($p^{soll}_{VR}$) commandée dans le cas d'une intervention de réglage d'antiblocage (32) sur la roue arrière (HR) est choisie beaucoup plus grande ($f^{Kompensation}_{ABS}$), de sorte que l'action de freinage ($M_{Brems\ Gesamt}$) de la motocyclette obtenue dans le cas d'une intervention de réglage d'antiblocage (32), en particulier pour chaque pression prédéfinie ($p^{mess}_{HZ\ HR}$) au niveau du cylindre de freinage principal (8) du circuit de freinage de roue arrière (6), soit approximativement égale à l'action de freinage (31) obtenue sans aucune intervention de régulation d'antiblocage.

5. Procédé selon la revendication 4, **caractérisé en ce que** la pression de freinage de roue avant ($p^{soll}_{VR}$) est choisie de telle sorte que l'action de freinage ($M_{Brems\ Gesamt}$) de la motocyclette obtenue dans le cas d'une intervention de réglage d'antiblocage (32) soit approximativement égale à l'action de freinage (31) obtenue sans aucune intervention de régulation d'antiblocage lorsque la pression de freinage de roue arrière ($p_{VR}$) au niveau de l'entrée (32) dans la régulation d'antiblocage est inférieure à une valeur limite prédéfinie et/ou lorsque le coefficient de friction de la chaussée est inférieur à une valeur limite prédéfinie et/ou lorsque la vitesse du véhicule est inférieure à une valeur limite prédéfinie.

6. Procédé selon au moins l'une quelconque des revendications 1 à 3, **caractérisé en ce que**, notamment pour chaque pression prédéfinie ($p^{mess}_{HZ}$) $_{HR}$) sur le cylindre de freinage principal (8) du circuit de freinage de roue arrière (5), la pression de freinage de roue avant ($p^{soll}_{VR}$) commandée lors d'une intervention de réglage d'antiblocage (32) sur la roue arrière (HR) est choisie beaucoup plus grande ($f^{Überkompensation}_{ABS}$), de sorte que l'action de freinage ($M_{Brems\ Gesamt}$, 41) de la motocyclette, obtenue dans le cas d'une intervention de réglage d'antiblocage (32), soit plus importante, notamment d'une mesure prédéterminée, que l'action de freinage (31) obtenue sans aucune intervention de régulation d'antiblocage.

7. Procédé selon la revendication 6, **caractérisé en ce que** la pression de freinage de roue avant ($p^{soll}_{VR}$) est choisie de telle sorte que l'action de freinage ($M_{Brems\ Gesamt}$, 41) de la motocyclette, obtenue dans le cas d'une intervention de réglage d'antiblocage (32), soit supérieure à l'action de freinage (31) obtenue sans aucune intervention de régulation d'antiblocage, lorsqu'il s'agit d'un freinage d'urgence.

8. Procédé selon la revendication 6 ou 7, **caractérisé en ce que** la pression de freinage de roue avant ($p^{soll}_{VR}$) est choisie de telle sorte que l'action de freinage ($M_{Brems\ Gesamt}$, 41) de la motocyclette, obtenue dans le cas d'une intervention de réglage d'antiblocage (32), soit supérieure à l'action de freinage (31) obtenue sans aucune intervention de régulation d'antiblocage, lorsque la pression de freinage de roue arrière ($p_{VR}$) au niveau de l'entrée (32) dans la régulation d'antiblocage est supérieure à une valeur limite prédéfinie et/ou lorsque le coefficient de friction de la chaussée est supérieur à une valeur limite prédéfinie et/ou lorsque la vitesse du véhicule est supérieure à une valeur limite prédéfinie.

9. Procédé selon au moins l'une quelconque des revendications 1 à 8, **caractérisé en ce que** la pression de freinage de roue avant ($p^{soll}_{VR}$) commandée dans le cas d'une intervention de réglage d'antiblocage (32) sur la roue arrière (HR) est choisie en fonction de la vitesse du véhicule.

**10.** Installation de freinage pour motocyclettes avec un système d'antiblocage et avec une fonction de freinage intégral, notamment électronique, **caractérisée en ce que** dans ce système est mis en oeuvre un procédé selon l'une quelconque des revendications 1 à 9.

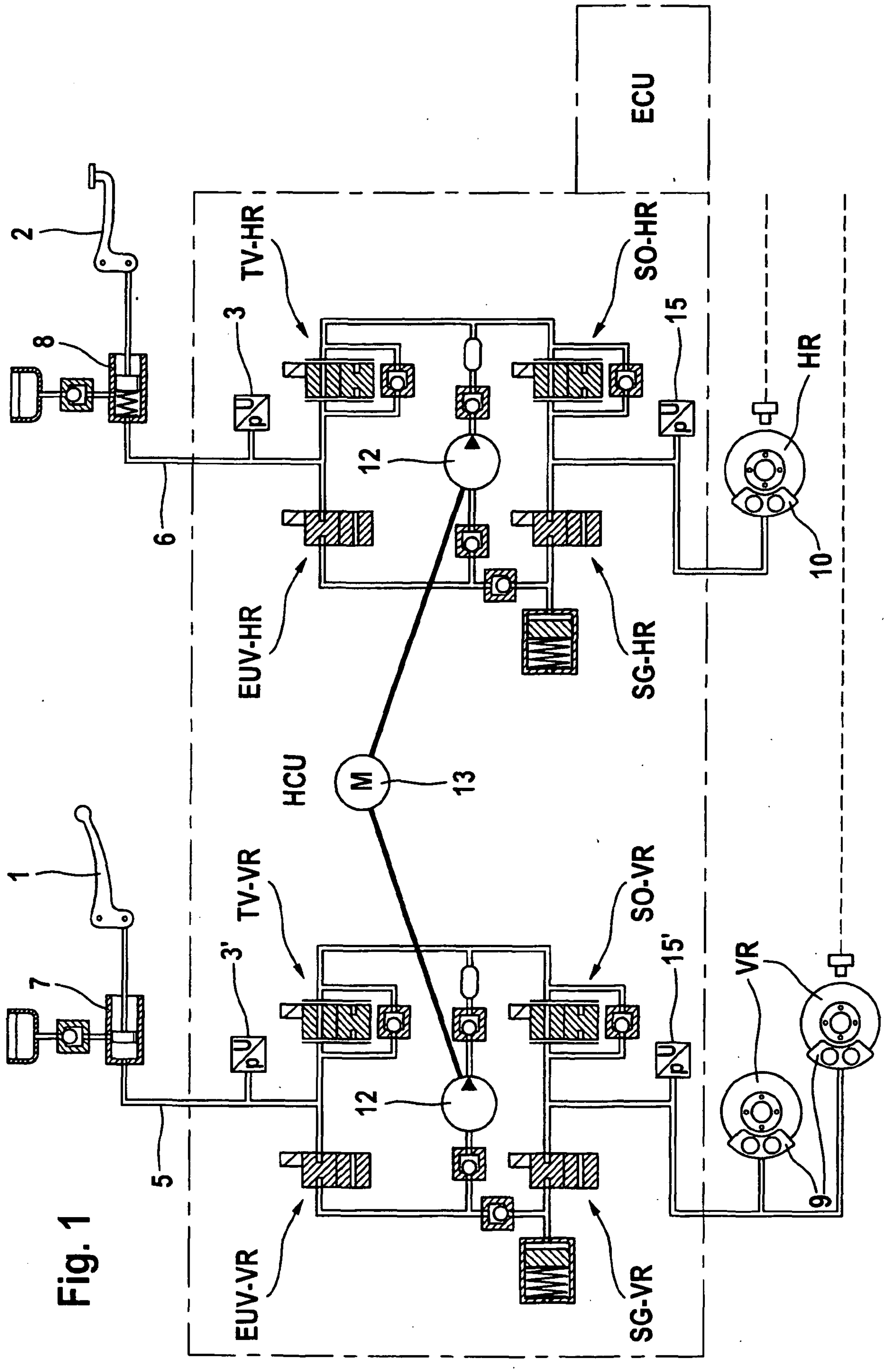
ECU
HCU
2
8
1
7
3
3'
15
15'
6
5
12
12
13
M
10
9
HR
VR
TV-HR
SO-HR
EUV-HR
SG-HR
TV-VR
SO-VR
EUV-VR
SG-VR
U
p

Fig. 1

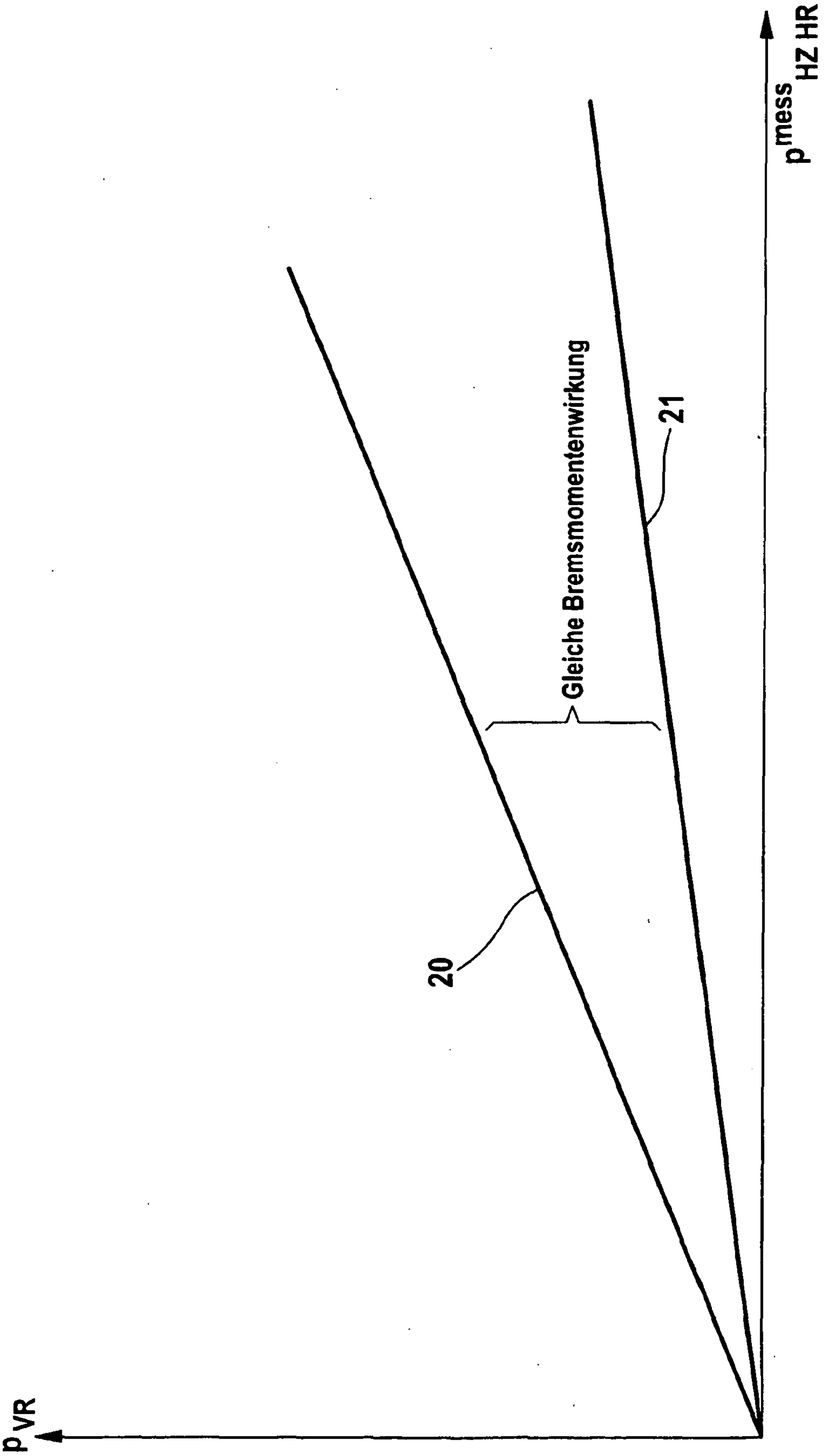


Fig. 2

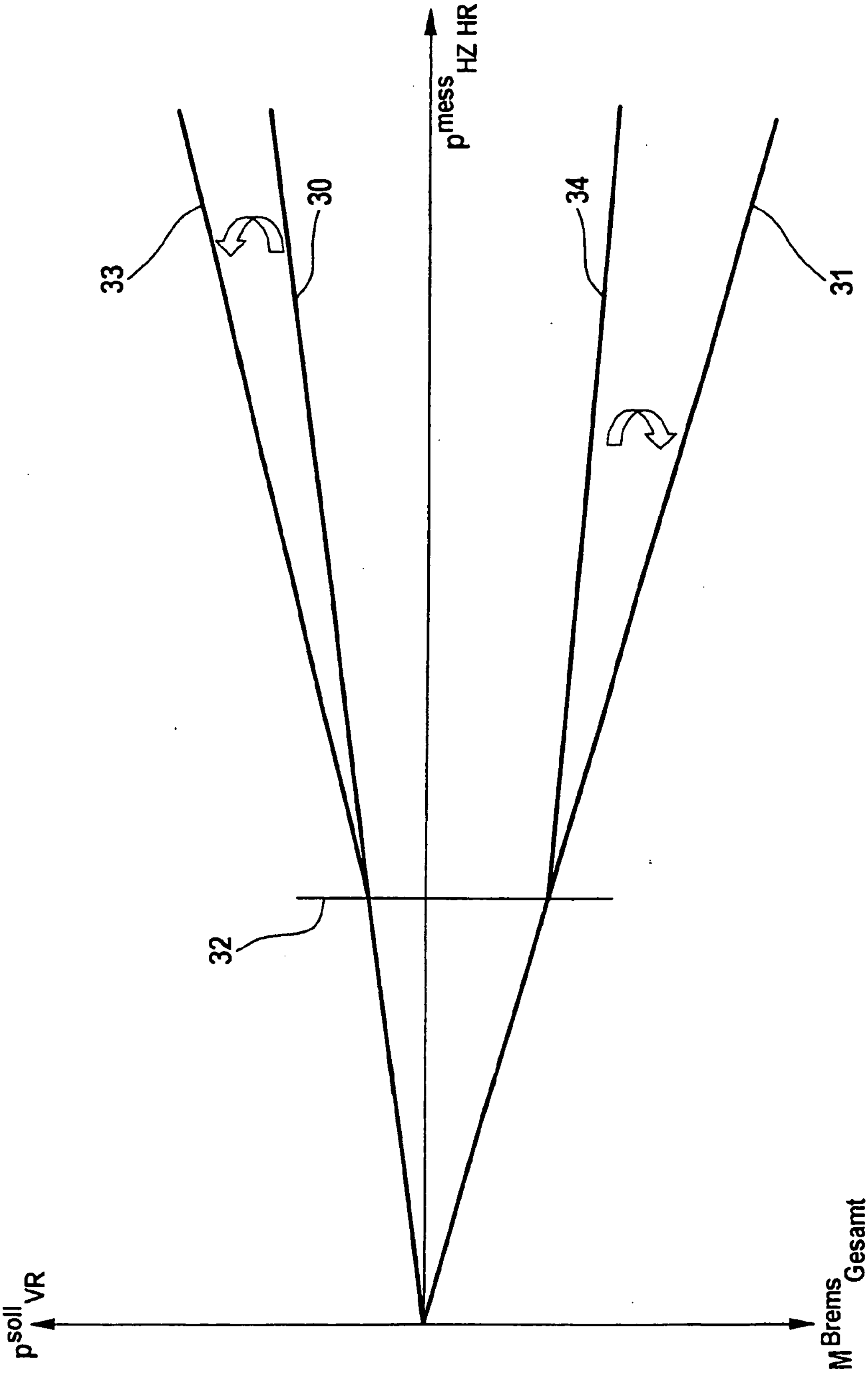


Fig. 3

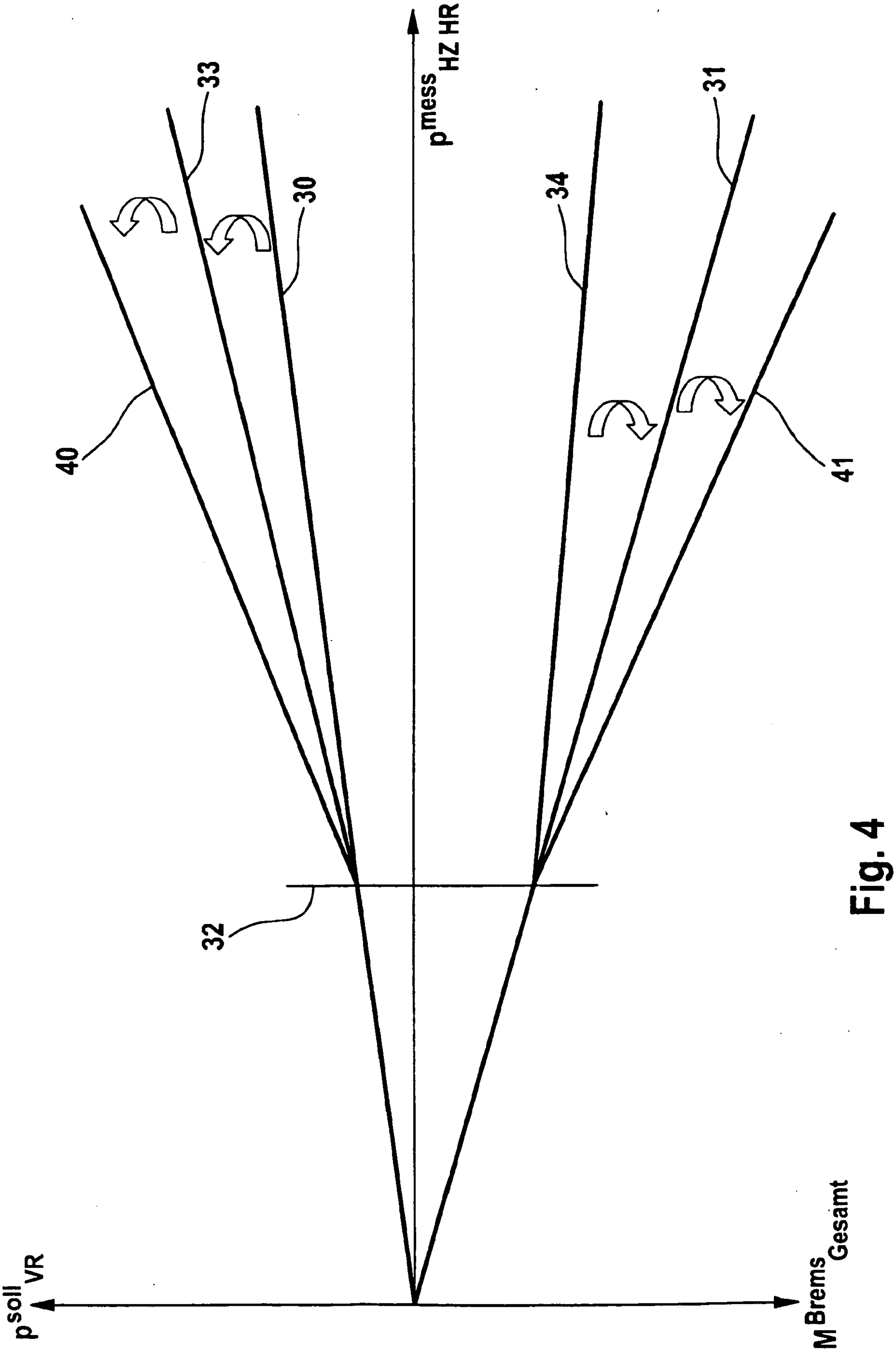


Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0548985 B1
- DE 4000212 A1
- DE 3803563 A1
- DE 10316351 A1
- DE 102005003255 A1
- EP 1318933 B1


### In der Beschreibung aufgeführte Nicht-Patentliteratur


- Bremsenhandbuch. Vieweg Verlag, Juli 2004, 184-192